# EUROPÄISCHE PATENTSCHRIFT

(11) **EP 2 223 191 B1**
(45) Veröffentlichungstag und Bekanntmachung des Hinweises auf die Patenterteilung: **10.04.2013**
(21) Anmeldenummer: 08865023.9
(22) Anmeldetag: 10.12.2008
(51) Int. Cl.: G05B 19/423, B25J 9/16

(54) **INDUSTRIEROBOTER UND VERFAHREN ZUM PROGRAMMIEREN EINES INDUSTRIEROBOTERS**
INDUSTRIAL ROBOT AND METHOD FOR PROGRAMMING AN INDUSTRIAL ROBOT
ROBOT INDUSTRIEL ET PROCÉDÉ DE PROGRAMMATION D'UN ROBOT INDUSTRIEL

(30) Priorität: 21.12.2007 DE 102007062108
(43) Veröffentlichungstag der Anmeldung: 01.09.2010
(73) Patentinhaber: KUKA Laboratories GmbH, 86165 Augsburg (DE)
(72) Erfinder: ZIMMERMANN, Uwe, 86152 Augsburg (DE)
(74) Vertreter: Patentanwälte Funk & Böss GbR
(86) Internationale Anmeldenummer: PCT/EP2008/067238
(87) Internationale Veröffentlichungsnummer: WO 2009/080526

(56) Entgegenhaltungen:
- EP-A- 0 573 657
- JP-A- 5 303 422
- US-A- 5 880 956
- US-B1- 6 385 508
- ARVIND BALIJEPALLI,T. KESAVADAS: "An Exploratory Haptic Based Robotic Path Planning and Training Tool" PROCEEDINGS OF THE 2002 IEEE, Mai 2002 (2002-05), Seiten 438-443, XP002515133 Washington,DC
- XUEJIAN HE ET AL: "A Haptic Virtual Turning Operation System" MECHATRONICS AND AUTOMATION, PROCEEDINGS OF THE 2006 IEEE INTERNATIONA L CONFERENCE ON, IEEE, PI, 1. Juni 2006 (2006-06-01), Seiten 435-440, XP031026809 ISBN: 978-1-4244-0465-0

## Beschreibung

Die Erfindung betrifft ein Verfahren zum Programmieren eines Industrieroboters und einen Industrieroboter.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Unter Verfahren zum Programmieren des Industrieroboters (Programmierverfahren), versteht man das planmäßige Vorgehen zur Erzeugung von Anwenderprogrammen.

Ein allgemein bekanntes Programmierverfahren ist das sogenannte Play-Back Verfahren, bei dem die Programmierung eines Arbeitsvorgangs durch manuelles Führen des Industrieroboters entlang einer gewünschten Raumkurve erfolgt. Dabei werden die Lage-Ist Werte, d.h. die Achsstellungen oder die TCP-Position (Tool Center Point Position) des Industrieroboters in einem definierten Zeit- oder Wegraster in das Anwenderprogramm übernommen.

Die EP 1 508 396 A1 offenbart ein Verfahren zum Steuern der Andruckskraft einer mittels eines Industrieroboters geführten Schweißzange. Die auf die Schweißzange wirkende Kraft wird während des Schweißens gemessen und der Roboter derart verstellt, dass die auf die Schweißzange wirkende Kraft gleich einer vorgegebenen Soll-Kraft ist.

A. Balijepalli et. al. offenbaren in "An Exploratory Haptic Based Robotic Path Planning and Training Tool", Proceedings of the 2002 IEEE International Conference on Robotics & Automation, Washington DC, USA, Mai 2002, Seiten 438-443 eine haptische Simulationsvorrichtung, mittels derer u.A. eine Person trainiert werden kann, die eine Bahnplanung für einen Roboter durchführen soll. Dies wird dadurch erreicht, dass die Person die haptische Vorrichtung bewegt und die Bewegung der Vorrichtung zusammen mit einem Modell des zu bearbeitenden Gegenstandes auf einem Bildschirm angezeigt wird. Aufgrund der Haptik der haptischen Vorrichtung spürt die Person eine "Berührung" mit dem virtuellen Modell.

Die Aufgabe der Erfindung ist es, ein Verfahren zum Programmieren eines Industrieroboters anzugeben, welches es einer Bedienperson des Industrieroboters erlaubt, in relativ einfacher Weise den Industrieroboter derart zu programmieren, dass dieser beim Ausführen des entsprechenden Anwenderprogramms ein vorbestimmtes Kraft- und/oder Momentenverhalten aufweist.

Eine weitere Aufgabe der Erfindung ist es, einen entsprechenden Industrieroboter anzugeben.

Die Aufgabe der Erfindung wird gelöst durch ein Verfahren zum Programmieren eines Industrieroboters, aufweisend folgende Verfahrensschritte:
- manuelles Führen eines Industrieroboters an eine virtuelle Fläche im Raum, bei deren Erreichen der Industrieroboter derart angesteuert wird, dass er sich nicht weiter manuell führen lässt,
- Ermitteln derjenigen Kraft und/oder desjenigen Drehmoments, die bzw. das auf den Industrieroboter wirkt, wenn trotz Erreichens der virtuellen Fläche versucht wird, den Industrieroboter weiter manuell zu führen, und
- Speichern der Kraft und/oder des Drehmoments.

Die Aufgabe der Erfindung wird auch gelöst durch einen Industrieroboter, der eingerichtet ist, sich manuell führen zu lassen, aufweisend
- einen Roboterarm mit einem Flansch und mehreren Achsen, die von Antrieben bewegbar sind,
- eine Steuervorrichtung, die eingerichtet ist, die Antriebe zum Bewegen der Achsen anzusteuern, und, wenn der Industrieroboter manuell geführt wird, bei Erreichen einer virtuellen Fläche im Raum die Antriebe derart anzusteuern, dass sich der Industrieroboter nicht weiter manuell führen lässt, und
- Mittel zum Ermitteln einer Kraft und/oder eines Drehmoments, die eingerichtet sind, diejenige Kraft und/oder das Drehmoment zu ermitteln, die bzw. das auf den Industrieroboter wirkt, wenn trotz Erreichens der virtuellen Fläche versucht wird, den Industrieroboter weiter manuell zu führen, wobei die Steuervorrichtung eingerichtet ist, die Kraft und/oder das Drehmoment zu speichern.

Der erfindungsgemäße Industrieroboter ist eingerichtet, dass mit ihm das erfindungsgemäße Verfahren ausgeführt werden kann.

Der erfindungsgemäße Industrieroboter ist eingerichtet, manuell geführt zu werden. Mittels manuellen Führens ist es u.A. möglich, die Bewegung des Industrieroboters, z.B. den Bahnverlauf des Flansches des Industrieroboters zu programmieren, indem der Flansch entlang der Bahn geführt wird und zumindest einige der Punkte dieser Bahn abgespeichert werden.

Das manuelle Führen lässt sich z.B. realisieren, indem zumindest indirekt am Flansch gezogen wird. Im Betrieb des Industrieroboters kann z.B. am Flansch ein Werkzeug befestigt werden. Befindet sich der Industrieroboter in einem Modus, in dem er manuell geführt wird, dann kann der Flansch derart eingerichtet sein, dass anstelle des Werkzeugs ein Griff am Flansch befestigt wird, mit dem der Industrieroboter manuell geführt werden kann. Durch ziehen am Griff wird indirekt am Flansch gezogen. Der Griff kann dann auch Eingabemittel, z.B. Tasten, aufweisen, bei deren Betätigen die aktuelle Position und/oder Orientierung des Flansches bzw. die Stellungen der Achsen in der Steuervorrichtung gespeichert werden. Der erfindungsgemäße Industrieroboter ist jedoch ferner derart eingerichtet, dass mittels des manuellen Führens alternaiv oder zusätzlich eine vom Industrieroboter aufzubringende Kraft und/oder ein vom Industrieroboter aufzubringendes Drehmoment programmiert werden kann. Dazu ist die virtuelle Fläche vorgesehen, bei deren Erreichen die Steuervorrichtung des Industrieroboters die Antriebe derart ansteuert, dass sich der Industrieroboter durch das manuelle Führen nicht weiter bewegen lässt. Wird trotzdem versucht, den Industrieroboter weiter manuell zu führen, wird also z.B. versucht, weiter in Richtung der virtuellen Fläche zu ziehen, dann bewirkt das weitere Ziehen am Flansch bzw. Griff (allgemein manuelles Führen) ein auf den Industrieroboter wirkende Kraft und/oder Drehmoment, die bzw. das mit den Mitteln zum Ermitteln einer Kraft und/oder eines Drehmoments ermittelt werden kann. Die auf den Industrieroboter ausgeübte Kraft bzw. das auf den Industrieroboter ausgeübte Drehmoment kann dann eventuell mit der aktuellen Position und/oder Orientierung des Industrieroboters gespeichert werden, so dass im Betrieb des Industrieroboters, in dem die Steuervorrichtung die Antriebe des Industrieroboters für eine automatische Bewegung ansteuert, dieser die gespeicherte Kraft bzw. das gespeicherte Drehmoment z.B. auf ein Werkstück ausübt.

Die Mittel zum Ermitteln einer Kraft und/oder eines Drehmoments können z.B. ein interner Kraft- und/oder Drehmomentsensor des Industrieroboters sein, der beispielsweise am Flansch, zwischen Griff/Werkzeug und Flansch oder zwischen Flansch und dem restlichen Roboterarm angeordnet ist und direkt die auf den Flansch wirkende Kraft und/oder das direkt auf den Flansch wirkende Drehmoment misst. Die Mittel zum Ermitteln einer Kraft und/oder eines Drehmoments können aber auch dadurch realisiert werden, dass sie die von den Antrieben des Industrieroboters aufgebrachten Drehmomente ermitteln. Handelt es sich bei den Antrieben um elektrische Antriebe, dann können die Drehmomente der Antriebe z.B. durch Analysieren der elektrischen Ströme der elektrischen Motoren der elektrischen Antriebe ermittelt werden.

Gemäß einer Ausführungsform des erfindungsgemäßen Verfahrens ist die virtuelle Fläche Teil eines virtuellen Umgebungsmodells, das auf einem Rechnermodell eines mit dem Industrieroboter zu bearbeitenden Werkstücks basiert. Der erfindungsgemäße Industrieroboter kann z.B. dafür verwendet werden, automatisch ein Werkstück zu bearbeiten. Für die automatische Bearbeitung kann es nötig sein, ein vorgegebenes Kraft-und/oder ein vorgegebenes Drehmomentprofil zu programmieren. Gemäß dieser Variante ist es z.B. möglich, den Industrieroboter manuell entlang des virtuellen Umgebungsmodells zu führen, um z.B. die Position und/oder die Orientierung des Industrieroboters aber auch aufzubringende Kräfte und/oder Drehmomente zu programmieren. Das virtuelle Umgebungsmodell umfasst insbesondere eine Information über die Position und/oder Orientierung, in der sich das Werkstück während des automatischen Bearbeitens durch den Industrieroboter befindet. Dadurch, dass für das Programmieren das virtuelle Umgebungsmodell und nicht das reale Werkstück verwendet wird, kann durch Ziehen am Flansch (oder Griff, usw.) eine aufzubringende Kraft und/oder ein aufzubringendes Drehmoment programmiert werden. Die aufzubringende Kraft bzw. das aufzubringende Drehmoment während des automatischen Bearbeitens des Werkstücks durch den erfindungsgemäßen Industrieroboter entspricht der Kraft (Drehmoment), die auf den Industrieroboter durch das Ziehen (manuelle Führen) während der Programmierung wirkt.

Würde jedoch das reale Werkstück (oder ein reales Dummy-Werkstück) zum Programmieren des Industrieroboters verwendet werden, dann könnte man bei einem Berühren des Werkstücks und gleichzeitigem weiteren Ziehen am Industrieroboter keine Kraft messen, da diese ja vom realen Werkstück aufgenommen wird.

Nach einer weiteren Ausführungsform des erfindungsgemäßen Verfahrens bzw. des erfindungsgemäßen Industrieroboters ist die virtuelle Fläche derart im Raum ausgerichtet, dass sie ein mit dem Industrieroboter zu bearbeitendes Werkstück zumindest teilweise einhüllt, so dass der Industrieroboter eine aufgrund des manuellen Führens ausgeführte Bewegung stoppt, bevor der Industrieroboter das Werkstück berührt. Durch diese Variante wird es einer Bedienperson ermöglicht, die Position und/oder Orientierung, in der sich das Werkstück während des automatischen Bearbeitens durch den Industrieroboter befindet, zu sehen. Dadurch, dass die virtuelle Fläche das Werkstück zumindest teilweise einhüllt, stoppt der erfindungsgemäße Industrieroboter während des manuellen Führens kurz vor dem Werkstück ohne es zu berühren. Dann ist es immer noch möglich, die Kraft bzw. das Drehmoment zu ermitteln, das bei weiterem manuellem Ziehen am Flansch auf den Industrieroboter wirkt.

Der erfindungsgemäße Industrieroboter kann manuell geführt werden. Um einer Bedienperson das manuelle Führen zu erleichtern, kann der erfindungsgemäße Industrieroboter gravitationskompensiert sein. Dies kann erreicht werden, indem die Gelenke des erfindungsgemäßen Industrieroboters mit jeweils Drehmomentsensoren ausgestattet sind und der erfindungsgemäße Industrieroboter eine entsprechende Regelung und ein entsprechendes Modell zur Kompensation dynamischer und statischer Kräfte, insbesondere der Gravitation, aufweist.

Durch die verwendete virtuelle Fläche befindet sich der erfindungsgemäße Industrieroboter während der Programmierung nicht in Kontakt mit einem realen Bauteil. Somit kann die offene Kinematik des erfindungsgemäßen Industrieroboters zum Erfassen der "virtuellen" Umgebungskraft, die der durch das ziehen am Industrieroboter resultierenden Kraft zugeordnet ist, genutzt werden.

Um dies zu können, sollte die Kraft, die am realen Bauteil während dessen automatischen Bearbeitens durch den erfindungsgemäßen Industrieroboter auftritt, berechnet und nach einer Ausführungsform der Bedienperson dargestellt werden. Diese Teilaufgabe lässt sich mit bekannten Verfahren aus der Haptik lösen. Hierzu kann u.A. ein Algorithmus verwendet werden, der aus dem Rechnermodell, z.B. in Form von CAD Daten, und der aktuellen Roboterposition die entsprechend wirkende Kraft berechnet. Diese kann nun genutzt werden, um die Drehmomente des Industrieroboters so zu regeln, dass die Bedienperson einen entsprechenden Widerstand spürt. Während hierbei aus einer Position eine entsprechende Kraft berechnet wird, existieren auch bekannte Verfahren, welche aus der Benutzerkraft eine entsprechende Position berechnen. Auch hierbei empfindet die Bedienperson eine entsprechende Kontaktkraft.

Die ermittelten Kräfte und/oder Drehmomente können insbesondere zeitbezogen oder positionsbezogen abgespeichert werden. Die den Kräften bzw. Drehmomenten zugeordneten aufgezeichneten Daten können vor dem Abspielen (Erstellen des Anwenderprogramms) mittels Datenverarbeitung verändert werden (Datenreduktion, Spline, Optimierung). Beim Abspielen des Anwenderprogramms können die gespeicherten Daten beliebigen Einfluss auf die Roboterbewegung ausüben. Damit ist gemeint, dass sowohl Kraft (Drehmoment) als auch Position aufgezeichnet wurde. Im Regelfall lassen sich nicht beide Bedingungen gleichzeitig regeln. Somit lassen sich beliebige Regelkonzepte auf den gewonnenen Daten durchführen (z.B. Hypride Regelung, Impedanzregelung).

Ausführungsbeispiele der Erfindung sind exemplarisch in den beigefügten schematischen Zeichnungen dargestellt. Es zeigen:
- Fig. 1: einen Industrieroboter,
- Figs. 2 und 3: einen Greifer zum manuellen Führen des Industrieroboters und
- Fig. 4: ein das Programmieren des Industrieroboters veranschaulichendes Flussdiagramm.

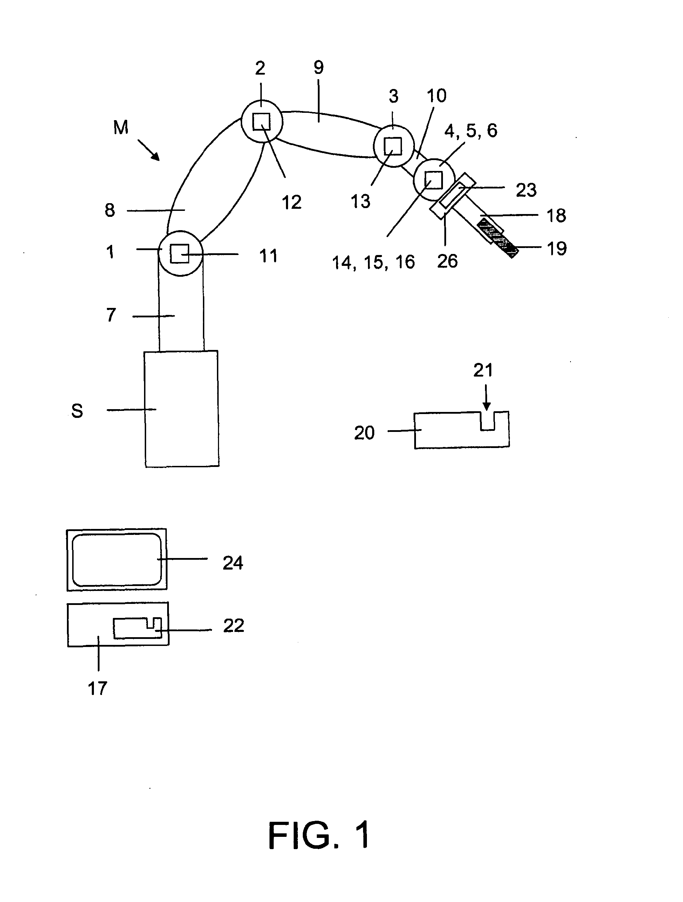

Die Fig. 1 zeigt einen Industrieroboter mit einem Roboterarm M, der im Falle des vorliegenden Ausführungsbeispiels auf einem Sockel S befestigt ist.

Der Roboterarm M des Industrieroboters weist mehrere Achsen 1-6, mehrere Hebeln 7-10 und einen Flansch 26 auf, an dem ein Werkzeug, z.B. ein Greifer 18, befestigt werden kann. Jede der Achsen 1-6 wird im Falle des vorliegenden Ausführungsbeispiels mit einem elektrischen Antrieb bewegt, die jeweils einen elektrischen Motor 11-16 aufweisen. Die elektrischen Antriebe sind in nicht dargestellter Weise mit einem Steuerrechner 17 elektrisch verbunden, so dass der Steuerrechner 17 bzw. ein auf dem Steuerrechner 17 laufendes Rechnerprogramm die elektrischen Antriebe derart ansteuern kann, sodass die Position und Orientierung des Flansches 26 und somit des am Industrieroboter befestigten Werkzeugs im Wesentlichen frei im Raum ausgerichtet werden kann.

Im Falle des vorliegenden Ausführungsbeispiels ist der Industrieroboter nicht nur dafür vorgesehen, den Flansch 26 bzw. den am Flansch 26 befestigten Greifer 18 auf einer vorbestimmten Bahn zu bewegen, sondern auch eine vorbestimmte Kraft und/oder ein vorbestimmtes Drehmoment auf den Flansch 26 bzw. auf den Greifer 18 auszuüben, so dass diese Kraft (Drehmoment) auf ein mit dem Werkzeug zu bearbeitendes Werkstück wirkt. Dies ist z.B. nötig, wenn der Industrieroboter dafür vorgesehen ist, einen mit dem Greifer 18 gegriffenen Kolben 19 in einen Spalt 21 eines Metallblocks 20 mit einer bestimmten Kraft und/oder einem bestimmten Drehmoment zu fügen.

Damit der im Betrieb befindliche Industrieroboter R den Flansch F wie gewollt bewegen kann und insbesondere die gewollte Kraft und/oder das gewollte Drehmoment beispielsweise positionsbezogen oder zeitbezogen auf den Flansch 26 ausüben kann, läuft auf dem Steuerrechner 17 ein den Industrieroboter geeignet steuerndes Rechnerprogramm.

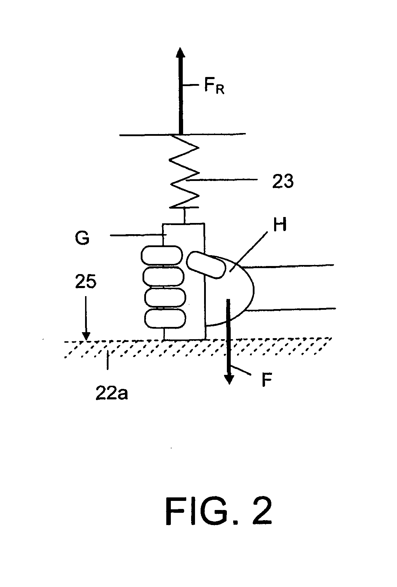

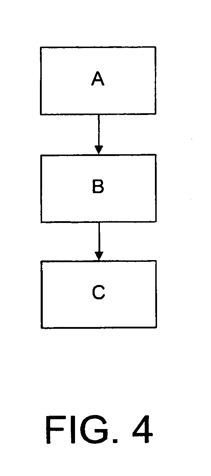

Dieses Rechnerprogramm wird im Falle des vorliegenden Ausführungsbeispiels durch manuelles Führen des Industrieroboters erstellt. Während des manuellen Führens wird der Industrieroboter bzw. dessen Flansch 26 an die gewünschte Position gebracht, indem z.B. eine in der Fig. 1 nicht dargestellte Person den Flansch 26 an die gewünschte Position zieht und dort wie gewünscht ausrichtet. Für die Programmierung kann am Flansch 26 anstelle des Greifers 18 ein in der Fig. 2 dargestellter Griff G befestigt sein, der beispielsweise der Übersicht halber nicht gezeigte Eingabemittel, z.B. Tasten, aufweist, bei deren Betätigung die aktuelle Position des Industrieroboters für das besagte Rechnerprogramm abgespeichert wird. Die Fig. 4 fasst Schritte beim Erstellen des Rechnerprogramms mittels eines Flussdiagramms zusammen.

Die vom Industrieroboter gewollte positionsbezogenen oder zeitbezogenen auszuübenden Kräfte und/oder Drehmomente werden im Falle des vorliegenden Ausführungsbeispiels mittels eines im Steuerrechner 17 gespeicherten Rechnermodells 22 des Blocks 20 programmiert. Das Rechnermodell 22 ist z.B. ein CAD Modell vom Block 20, das diesen im Maßstab 1:1 modelliert. Des Weiteren umfasst das Rechnermodell 22 eine Angabe über die Lage im Raum, d.h. modelliert ebenso die Position und Orientierung des Blocks 20.

Um nun die gewollten auszuübenden Kräfte bzw. Drehmomente zu programmieren, steuert der Steuerrechner 17 die elektrischen Antriebe des Industrieroboters derart an, dass die Person, die den Industrieroboter mittels des Griffs G führt, den Griff G nur bis zu einer virtuellen Fläche 25 bewegen kann, die durch das Rechnermodell 22 vom Block 20 bestimmt wird. Anders ausgedrückt lässt sich der Industrieroboter derart führen, als ob der Block 20 real vorhanden wäre, so dass die Person, deren Hand H in der Fig. 2 gezeigt ist, den Industrieroboter nicht weiter bewegen kann, wenn dieser die virtuelle Fläche 25 erreicht, Schritt A des Flussdiagramms.

Die virtuelle Fläche 25 ist im Falle des vorliegenden Ausführungsbeispiels Teil eines dem Rechnermodell 22 bzw. dem Block 20 zugeordneten virtuellen Umgebungsmodells 22a, das den Block 20 simuliert. Erreicht der Griff G das virtuelle Umgebungsmodell 22a bzw. die virtuelle Fläche 25, dann kann die Person den Industrieroboter nicht weiter in Richtung des virtuellen Umgebungsmodells 22a bewegen. Will die Person trotzdem den Industrieroboter weiter bewegen, so wirkt auf den Industrieroboter eine Kraft *F* in Richtung des virtuellen Umgebungsmodells 22a. Die Kraft *F* kann z.B. mit einem Kraftsensor 23 gemessen werden, der z.B. am Flansch 26 befestigt ist und die auf den Flansch 26 bzw. den Griff G wirkenden Kräfte misst, Schritt B des Flussdiagramms.

Der Kraftsensor 23 ist in nicht dargestellter Weise mit dem Steuerrechner 17 verbunden und überträgt den gemessenen Kräften zugeordnete Signale an den Steuerrechner 17. Im Falle des vorliegenden Ausführungsbeispiels misst der Kraftsensor 23 Kräfte in und quer zur Längsachse des Griffs G.

Im Falle des vorliegenden Ausführungsbeispiels ist der Steuerrechner 17 mit einem Bildschirm 24 verbunden, so dass der Person die mit dem Kraftsensor 23 gemessenen Kräfte und somit die aktuell ausgeübte Kraft *F* angezeigt werden kann. Demnach ist es der Person möglich, aufgrund des manuellen Führens des Industrieroboters die während des Betriebs des Industrieroboters auf den Block 20 auszuübenden Kräfte während des Programmierens z.B. durch Aktivieren der nicht näher dargestellten Eingabemittel des Griffs G positionsbezogen und/oder zeitbezogen im Steuerrechner 17 abzuspeichern, Schritt C des Flussdiagramms.

Die während des Programmierens des Industrieroboters aufgezeichneten Daten können dann vor dem Betrieb des Industrieroboters, im Rahmen dessen der Industrieroboter den Greifer 18 bewegt, mittels Datenverarbeitung (z.B. Datenreduktion, Spline, Optimierung) verändert werden. Beim Betrieb des Industrieroboters können die gespeicherten Daten beliebigen Einfluss auf die Roboterbewegung ausüben. Damit ist gemeint, dass im Falle des vorliegenden Ausführungsbeispiels beim Programmieren sowohl die Kraft *F* als auch die Position aufgezeichnet wurden.

Um das manuelle Führen des Industrieroboters zu erleichtern, kann der Industrieroboter in den Figuren nicht näher dargestellte, dem Fachmann jedoch allgemein bekannte, den Gelenken des Industrieroboters zugeordnete Drehmomentsensoren aufweisen. Mittels einer entsprechenden Regelung und einem entsprechenden Modell vom Industrieroboter können dynamische und statischer Kräfte, insbesondere Gravitationskräfte des Industrieroboters während des manuellen Führens kompensiert werden.

Des Weiteren ist es möglich, die während des Programmierens des Industrieroboters auf den Industrieroboter wirkende Kraft F mittels einer vom Industrieroboter aufzubringenden, und der Kraft F entgegen gerichteten Gegenkraft F_{R} zu ermitteln, indem z.B. die vom Industrieroboter bzw. dessen elektrischen Motoren 11-16 aufgebrachten Drehmomente ausgewertet werden. Die vom Industrieroboter aufgebrachten Drehmomente lassen sich z.B. durch Auswerten der elektrischen Ströme der elektrischen Motoren 11-16 ermitteln.

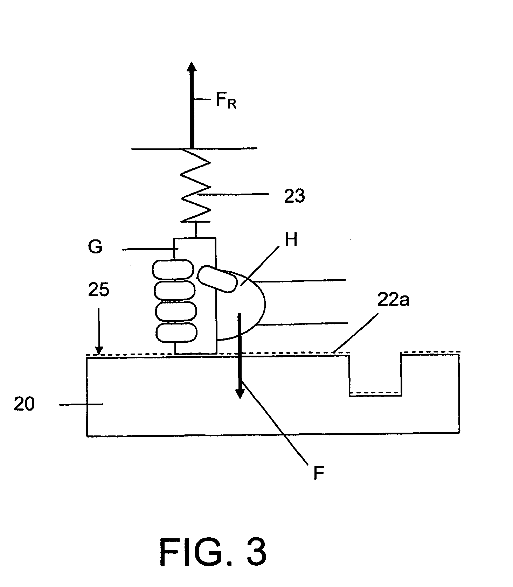

Im Falle des in der Fig. 2 gezeigten und obenstehend beschriebenen Ausführungsbeispiels kann die Person aufgrund des Rechnermodells 22 vom Block bzw. dem virtuellen Umgebungsmodell 22a oder der virtuellen Fläche 25 die vom Industrieroboter aufzuwendenden Kräfte *F* programmieren. Die Fig. 3 zeigt ein weiteres Ausführungsbeispiel, bei dem das auf dem Rechnermodell 22 basierende virtuelle Umgebungsmodell 22a den Block 22 virtuell einhüllt, so dass bei einem manuellen Führen des Industrieroboters in Richtung des Blocks 20 der Industrieroboter aufgrund des virtuellen Umgebungsmodells 22a kurz vor einer Berührung mit dem Block 20 gestoppt wird. Somit ist es ebenfalls möglich, durch weiteres ziehen des Griffs G in Richtung des Blocks 20 die Kraft *F* auf den Flansch 26 auszuüben.

## Patentansprüche

1. Verfahren zum Programmieren eines Industrieroboters, aufweisend folgende Verfahrensschritte:
- manuelles Führen eines Industrieroboters an eine virtuelle Fläche (25) im Raum, bei deren Erreichen der Industrieroboter derart angesteuert wird, dass er sich nicht weiter manuell führen lässt,
- Ermitteln derjenigen Kraft (F) und/oder desjenigen Drehmoments, die bzw. das auf den Industrieroboter wirkt, wenn trotz Erreichens der virtuellen Fläche (25) versucht wird, den Industrieroboter weiter manuell zu führen, und
- Speichern der Kraft (F) und/oder des Drehmoments.

2. Verfahren nach Anspruch 1, bei dem die virtuelle Fläche (25) Teil eines virtuellen Umgebungsmodells (22a) ist, das auf einem Rechnermodell (22) eines mit dem Industrieroboter zu bearbeitenden Werkstücks (20) basiert.

3. Verfahren nach Anspruch 1 oder 2, bei dem die virtuelle Fläche (25) derart im Raum ausgerichtet ist, dass sie ein mit dem Industrieroboter zu bearbeitendes Werkstück (20) zumindest teilweise einhüllt, so dass der Industrieroboter eine aufgrund des manuellen Führens ausgeführte Bewegung stoppt, bevor der Industrieroboter das Werkstück (20) berührt.

4. Verfahren nach einem der Ansprüche 1 bis 3, aufweisend zumindest indirektes Ziehen an einem Flansch (26) des Industrieroboters als das manuelle Führen.

5. Verfahren nach einem der Ansprüche 1 bis 4, aufweisend Ermitteln der Kraft (F) und/oder des Drehmoments mittels
- eines internen Kraft- und/oder Drehmomentsensors (23) des Industrieroboters und/oder
- von Antrieben (11-16) des Industrieroboters aufgebrachter Drehmomente.

6. Verfahren nach einem der Ansprüche 1 bis 5, zusätzlich aufweisend Speichern der Position und/oder Orientierung des Industrieroboters zum Zeitpunkt der ausgeübten Kraft (F) und/oder des ausgeübten Drehmoments.

7. Industrieroboter, der eingerichtet ist, sich manuell führen zu lassen, aufweisend einen Roboterarm (M) mit einem Flansch (26) und mehreren Achsen (1-6), die von Antrieben (11-16) bewegbar sind, und eine Steuervorrichtung (17), die eingerichtet ist, die Antriebe (11-16) zum Bewegen der Achsen (1-6) anzusteuern, **dadurch gekennzeichnet, dass**
- die Steuervorrichtung (17) eingerichtet ist, wenn der Industrieroboter manuell geführt wird, bei Erreichen einer virtuellen Fläche (25) im Raum die Antriebe (11-16) derart anzusteuern, dass sich der Industrieroboter nicht weiter manuell führen lässt, und
- der Industrieroboter Mittel (23) zum Ermitteln einer Kraft und/oder eines Drehmoments aufweist, die eingerichtet sind, diejenige Kraft (F) und/oder das Drehmoment zu ermitteln, die bzw. das auf den Industrieroboter wirkt, wenn trotz Erreichens der virtuellen Fläche (25) versucht wird, den Industrieroboter weiter manuell zu führen, wobei die Steuervorrichtung (17) eingerichtet ist, die Kraft (F) und/oder das Drehmoment zu speichern.

8. Industrieroboter nach Anspruch 7, bei dem die virtuelle Fläche (25) Teil eines virtuellen Umgebungsmodells (22a) ist, das auf einem Rechnermodell (22) eines mit dem Industrieroboter zu bearbeitenden Werkstücks (20) basiert.

9. Industrieroboter nach Anspruch 7 oder 8, bei dem die virtuelle Fläche (25) derart im Raum ausgerichtet ist, dass sie ein mit dem Industrieroboter zu bearbeitendes Werkstück (20) zumindest teilweise einhüllt, so dass der Industrieroboter eine aufgrund des manuellen Führens ausgeführte Bewegung stoppt, bevor der Industrieroboter das Werkstück (20) berührt.

10. Industrieroboter nach einem der Ansprüche 7 bis 9, der dadurch manuell geführt wird, indem zumindest indirekt an seinem Flansch (26) gezogen wird.

11. Industrieroboter nach einem der Ansprüche 7 bis 10, bei dem die Mittel (23) zum Ermitteln einer Kraft und/oder eines Drehmoments einen internen Kraft- und/oder Drehmomentsensor (23) aufweisen und/oder die von den Antrieben (11-16) aufgebrachten Drehmomente ermitteln.

12. Industrieroboter nach einem der Ansprüche 7 bis 11, dessen Steuervorrichtung (17) ferner eingerichtet ist, die Position und/oder Orientierung des Industrieroboters zum Zeitpunkt der ausgeübten Kraft (F) und oder des ausgeübten Drehmoments zu speichern.

## Claims

1. Method for programming an industrial robot comprising the following steps:
- manually guiding an industrial robot to a virtual surface (25) in space, when the latter is reached the industrial robot is actuated so that it can no longer be guided manually,
- determining the force (F) and/or the torque that acts or act on the industrial robot when an attempt is made to guide the industrial robot further manually despite its having reached the virtual surface (25), and
- saving the force (F) and/or the torque.

2. Method according to claim 1, wherein the virtual surface (25) is part of a virtual environmental model (22a), which is based on a computer model (22) of a workpiece (20) to be processed by the industrial robot.

3. Method according to claim 1 or 2, wherein the virtual surface (25) is oriented in space in such a way that it at least partially surrounds a workpiece (20) to be processed by the industrial robot, so that the industrial robot stops a movement carried out on the basis of manual guiding before the industrial robot touches the workpiece (20).

4. Method according to any one of claims 1 to 3, comprising at least indirectly pulling on a flange (26) of the industrial robot as the manual guiding.

5. Method according to any one of claims 1 to 4, comprising determining the force (F) and/or of the torque by means of
- an internal force and/or torque sensor (23) of the industrial robot and/or
- torques produced by drives (11-16) of the industrial robot.

6. Method according to any one of claims 1 to 5, also comprising saving the position and/or orientation of the industrial robot at the moment the force (F) and/or the torque is exerted.

7. Industrial robot which is set up to be guided manually, comprising a robot arm (M) with a flange (26) and a plurality of axes (1-6) which can be moved by drives (11-16), and a control device (17) which is set up to actuate the drives (11-16) for moving the axes (1-6),
**characterised in that**
- the control device (17) is set up, when the industrial robot is guided manually, to actuate the drives (11-16) when a virtual surface (25) in space is reached, in such a way that the industrial robot cannot be guided further manually, and
- the industrial robot comprises means (23) for determining a force and/or torque, which are set up to determine the force (F) and/or torque that acts or act on the industrial robot, if an attempt is made to continue guiding the industrial robot manually despite it having reached the virtual surface (25), wherein the control device (17) is set up to save the force (F) and/or torque.

8. Industrial robot according to claim 7, wherein the virtual surface (25) is part of a virtual environmental model (22a), which is based on a computer model (22) of a workpiece (20) to be processed by the industrial robot.

9. Industrial robot according to claim 7 or 8, wherein the virtual surface (25) is oriented in space in such a way that it surrounds at least partially a workpiece (20) that is to be processed by the industrial robot, so that the industrial robot stops a movement carried out on the basis of manual guiding before the industrial robot touches the workpiece (20).

10. Industrial robot according to any one of claims 7 to 9, which is guided manually by pulling at least indirectly on its flange (26).

11. Industrial robot according to any one of claims 7 to 10, wherein the means (23) for determining a force and/or a torque have an internal force sensor and/or torque sensor (23) and/or determine the torques applied by the drives (11-16).

12. Industrial robot according to any one of claims 7 to 11, the control device (17) of which is also set up to save the position and/or orientation of the industrial robot at the moment of the exerted force (F) and/or the exerted torque.

## Revendications

1. Procédé de programmation d'un robot industriel, présentant les étapes de procédé suivantes :
- guidage manuel d'un robot industriel vers une surface virtuelle (25) dans l'espace, à l'atteinte de laquelle le robot industriel est piloté de telle sorte qu'il ne peut pas être guidé plus loin manuellement,
- détermination de la force (F) et/ou du couple de rotation qui agit sur le robot industriel lorsque, malgré l'atteinte de la surface virtuelle (25), on tente de poursuivre le guidage manuel du robot industriel, et
- mémorisation de la force (F) et/ou du couple de rotation

2. Procédé selon la revendication 1, dans lequel la surface virtuelle (25) fait partie d'un modèle d'environnement (22a) virtuel qui est basé sur un modèle informatique (22) d'une pièce d'oeuvre (20) à usiner avec le robot industriel.

3. Procédé selon l'une des revendications 1 ou 2, dans lequel la surface virtuelle (25) est orientée dans l'espace de telle manière qu'elle enveloppe au moins partiellement une pièce d'oeuvre (20) à usiner avec le robot industriel, de telle sorte que le robot industriel arrête un mouvement exécuté sur la base du guidage manuel avant que le robot industriel touche la pièce à oeuvrer (20).

4. Procédé selon l'une des revendications 1 à 3, présentant au moins le tirage indirect d'une bride (26) du robot industriel en tant que guidage manuel.

5. Procédé selon l'une des revendications 1 à 4, présentant la détermination de la force (F) et/ou du couple de rotation au moyen
- d'un capteur de force ou de couple de rotation (23) interne du robot industriel et/ou
- de couples de rotation appliqués par des entraînements (11-16) du robot industriel.

6. Procédé selon l'une des revendications 1 à 5, présentant additionnellement la mémorisation de la position et/ou de l'orientation du robot industriel au moment de la force (F) exercée et/ou du couple de rotation exercé.

7. Robot industriel qui est aménagé pour être guidé à la main, présentant un bras de robot (M) avec une bride (26) et plusieurs axes (1-6) qui peuvent être mus par des entraînements (11-16), et un dispositif de commande (17) qui est aménagé pour piloter les entraînements (11-16) afin de mouvoir les axes (1-6), **caractérisé en ce que**
- le dispositif de commande (17) est aménagé pour piloter les entraînements (11-16) de telle sorte que le robot industriel ne peut pas être guidé plus loin manuellement lorsque le robot industriel est guidé manuellement et que la surface virtuelle (25) dans l'espace est atteinte, et
- le robot industriel présente des moyens (23) pour déterminer une force et/ou un couple de rotation, lesquels sont aménagés pour déterminer la force (F) et/ou le couple de rotation qui agit sur le robot industriel, lorsque, malgré l'atteinte de la surface virtuelle (25), on tente de poursuivre le guidage manuel du robot industriel, le dispositif de commande (17) étant aménagé pour mémoriser la force (F) et/ou le couple de rotation.

8. Robot industriel selon la revendication 7, dans lequel la surface virtuelle (25) fait partie d'un modèle d'environnement (22a) virtuel qui est basé sur un modèle informatique (22) d'une pièce d'oeuvre (20) à usiner avec le robot industriel.

9. Robot industriel selon la revendication 7 ou 8, dans lequel la surface virtuelle (25) est orientée dans l'espace de manière qu'elle enveloppe au moins partiellement une pièce d'oeuvre (20) à usiner avec le robot industriel, de telle sorte que le robot industriel arrête un mouvement exécuté sur la base du guidage manuel avant que le robot industriel touche la pièce à oeuvrer (20).

10. Robot industriel selon l'une des revendications 7 à 9, qui est guidé manuellement par le fait qu'il est tiré au moins indirectement par sa bride (26).

11. Robot industriel selon l'une des revendications 7 à 10, dans lequel les moyens (23) pour déterminer une force et/ou un couple de rotation présentent un capteur de force et/ou de couple de rotation (23) interne et/ou déterminent les couples de rotation appliqués par les entraînements (11-16).

12. Robot industriel selon l'une des revendications 7 à 11, dont le dispositif de commande (17) est en outre aménagé pour mémoriser la position et/ou l'orientation du robot industriel au moment de la force (F) exercée et/ou du couple de rotation exercé.
